# EUROPEAN PATENT SPECIFICATION

(11) **EP 0 611 694 B1**
(45) Date of publication and mention of the grant of the patent: **22.07.1998**
(21) Application number: 93106524.7
(22) Date of filing: 22.04.1993
(51) Int. Cl.: B65B 7/02, B29C 65/02

(54) **device for sealing bags**
Vorrichtung zum Versiegeln von Säcken
dispositif pour sceller des sacs

(30) Priority: 16.02.1993 IT PD930027; 09.03.1993 IT PD930054
(43) Date of publication of application: 24.08.1994
(73) Proprietor: SACCHETTIFICIO NATIONALE G. CORAZZA S.p.A., I-35020 Ponte San Nicolò (Padova) (IT)
(72) Inventor: Selmin, Benito, I-35100 Padova (IT)
(74) Representative: Gustorf, Gerhard, Dipl.-Ing.

(56) References cited:
- EP-A- 0 001 015
- DE-A- 1 903 992
- DE-B- 1 256 577
- US-A- 4 109 792
- US-A- 4 367 620

## Description

The present invention relates to a device for the automatic sealing of bags transported on a conveyor and having a filling valve to the interior surface of which a glue is applied that is solid at room temperature and becomes fluid by heating, said device comprising a heated pressure device acting against the opposite walls of the valve after filling.

Nowadays several kinds of bags for the packing of loose materials, such as flour, cereals, fertilizer, antiparasitics, chemical compounds and any other granular or powder material, harmful too, are well-known.

Such bags are made up with one or more paper film or other material sheets that are joined, fold up and sticked on the edges in order to get the shape of a closed bag. During the sticking, a strip of paper folded as a ring is placed on one of the edges; such paper ring, generally called valve, has got the edges surmonting, and is flat either when the bag is empty or when the bag is quite full, but in order to allow the introduction of the nozzle carrying the material to be packed. Such bags are widely used as they can be filled up by automatic systems, but the trouble is that the valve is not sealed up.

There may be lots of disadvantages: during the transport of the bags, part of the product can be lost; it is possible that pollution as insects, powder etc. goes inside the bag and there is a possibility of easy theft or replacement of the material.

A device as set forth in the preamble of claim 1 is known by EP-A 1 015. The known heating device is in the form of clamp means having a static anvil and a pressing anvil which are both provided with electrical restistance heating elements. This means that the sealing process is rather delicate as the solidifaction of the seal takes place at room temperature which increases during the operation time of the device. Accordingly, after some hours of operation, the room temperature is so high that the sealing quality is reduced.

DE-A 1 256 577 describes a device for filling and sealing bags. Said device comprises two movable sealing clamps which are provided with a heated pressure element lying between upper and lower suction openings operated during the filling phase. In the closing phase, through said openings cooling air is directed against the filling valve.

In US-A 4 109 792 a method of packaging is illustrated using a sealing head that is provided both with a hot gas inlet valve and a cold gas inlet valve for sealing and cooling purposes.

It is an object of the invention to provide a sealing device that guarantees a constant sealing quality during the whole operation time of the device, independent from the ambient temperature. This problem should be resolved by very simple means without complicating the structure of the device.

According to the invention, this problem is resolved by the characterising features of claim 1. Further characteristics of the invention are described in the dependent claims.

The bag has a special valve that allows to seal it up and avoids tempering of the bag. The valve is made up with a strip of paper that makes, thanks to two folds, a closed ring. On the inside walls of the valve some special glue called "hot melt" is laid which may be melted by heating.

After the filling of the bag by the nozzle, as usual, the valve is heated at a right temperature by the heating device or in any other way. The "hot melt", that is usually solid during the filling up, is then melted by heating and goes into the whole surface allowing the sticking of the two sides of the valve.

In such a way material inside the bag cannot be lost; that material contained inside the bag cannot be polluted by insects, powder etc; it is impossible to replace or steal the material inside the bag without showily and irreparably tampering with the valve or the bag.

It is possible to use such a bag also with automatized or not filling up lines where bags are on a belt carrier.

There is the problem of sealing up the bag after having filled it up, and to apply the device on the belt carrier transporting the same bag, for the best efficiency.

There are no devices in this field that automatically seal up a bag having a filling valve sealable with glue.

So, an automatic device for the sealing of the bags, having sealable valve, has been planned and made up.

Such device consists of a moving plate heated and mounted on a slide which runs side by side to the belt carrier.

The plate is mounted on a slide in order to be lifted and lowered on a plane perpendicular to the way of the movement of the belt carrier.

When a full bag arrives near the starting of the slide an automatic gear starts the device: the heating plate is lowered and the slide follows the movement of the bag on the belt keeping always pressed the plate on the side of the bag where the sealable valve is placed.

Such plate is at first heated till the temperature that fairly melts the glue of the valve and the the wall of the bag is made cold as to speed up the solidification of the glue by a similar device without heat.

After a right distance during which the slide has followed the bag with the plates pressed one after the other on the same bag, that is a right time of heating and right time of cooling of the valve, and then after the valve has been sealed up, the slide lifts the latest plate and comes back to the starting position in order to repeat the sealing cycle on another bag.

To be able to operate on bags placed one after the other on the belt carrier, it is possible to place a slide on each of the two sides of the same belt carrier.

The first operation consists in cleaning the valve insufflating air as to remove some possible residual particles of the packed product.

Afterwards the contact plate is heated and this operation can be made by any suitable system , for example by hot air, by any hot fluid, or, favourite system, by electric resistance; in a similar way the cooling of the other plate can be made by any suitable system, through any cooling fluid or material, through room air, or through forced of cold air.

In the enclosed tables a practice achievement of the above applied on a belt carrier with horizontal bags, is represented as not restrictive example. A similar appliance can be also made on belt carriers with vertical bags.
- Fig. 1: shows a section of the upper side of a bag,
- Fig. 2: is a section through the bag put on a nozzle during the filling operation,
- Fig. 3: illustrates the bag when closing the valve,

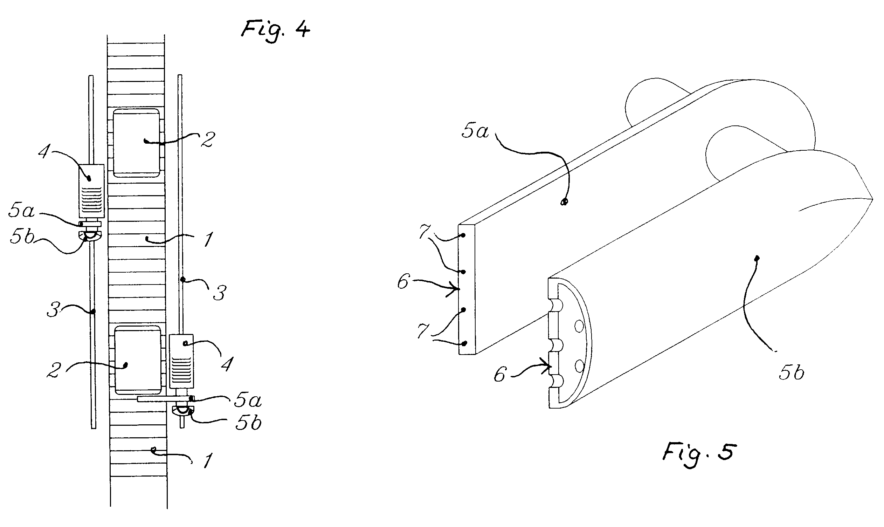

- Fig. 4: is a view on a belt carrier,
- Fig. 5: is a particular view of the sealing device.

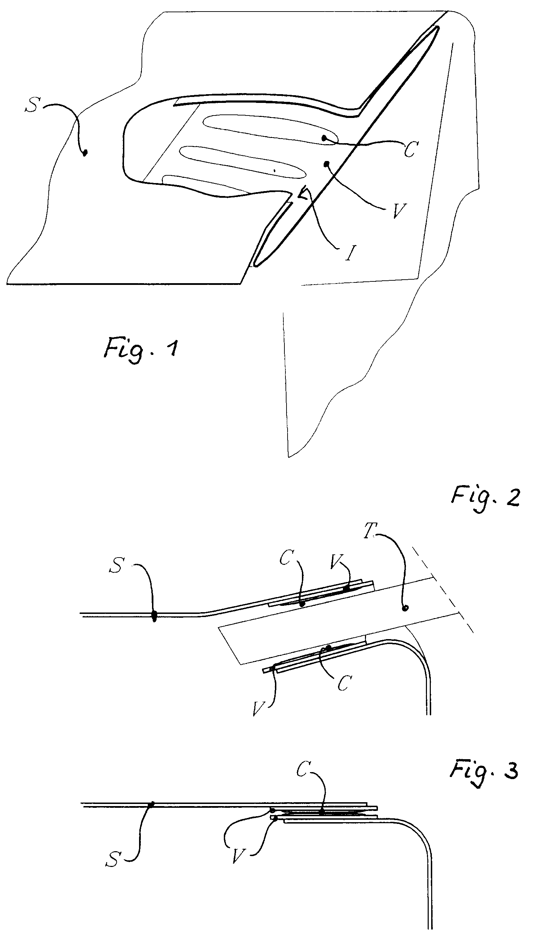

Figure No. 1 shows a section of the upper side of the bag (S); the valve (V), sticked on the edges of the bag (S) , contains a little glue (C) on the internal surface (I) that may be melted by heating.

I order to fill up the bag (S) (fig. 2) it is sufficient to open the valve (V) and put on the nozzle (T). When the bag (S) is filled up and the nozzle (T) taken away, it is sufficient to heat the valve (V) in order to melt the glue (C) and press the outer side of the bag (S) to stick the inside walls of the valve (V) where there is the glue (C) which then becomes cold and solid.

Bags (2) lie on the belt carrier (1) provided with a thermosealable filling valve and with the same valve turned on the opposite way too.

On the belt carrier sides (1) some guides (3) are placed on which the slides (4) with plates (5a, 5b) are running.

Every couple of plates (5a, 5b) is linked up to the relative slide (4) as to be lifted and lowered on a perpendicular plane to the movement of the belt carrier (1).

The heating plate (5a) has got the contact surface flat (6) of the plate (5a), regulated by a thermocouple, are placed.

The second plate (5b), has instead got a generic pipe shape.

A forced emission of air is put on the slide (4) through a conveyor which insufflates air to the sealing valve edges and/or inside the second plate (5b).

When an already filled up bag (2) reaches the slides (4) with the plate (5), an automatic gear arranges the sealing device.

The heating plate (5a) is lowered and the slide (4) follows the bag (2) to be sealed up. The speed of the slide (4) is the same or little more than the one of the belt carrier (1) as to keep every plate (5) firmly pressed on the bag side (2) where the thermosealable valve is placed.

For a certain time the plate (5a) is heated through the electric resistances (7) as to take the same plate (5a) at such a temperature to fairly melt the glue inside the thermosealable valve. Afterwards, after that the glue of the valve has been melted, such plate (5a) lifts in order to let intervene the second perforated plate (5b) which, keeping the pressure on the valve as during the previous cycle, makes rapidly cold the valve and its glue aiding the sealing.

At least, when sealing has been made up, the plate (5b) is lifted and the slide (4) comes back to the starting place as to seal another bag (2).

To better the cooling of the plate (5b), and the glue of the valve too, the plane wall (6) of the plate (5b), can have a series of holes in order to reduce at minimum the heating absorption on the valve helping the cooling in the shortest time.

## Claims

1. Device for the automatic sealing of bags (2) transported on a conveyor (1) and having a filling valve (V) to the interior surface (I) of which a glue (C) is applied that is solid at room temperature and becomes fluid by heating, said device comprising a heated pressure device acting against the opposite walls of the valve (V) after filling, characterised in that said heated pressure device is combined with a pressure cooling device for accelerating the sealing operation, wherein the pressure device and the cooling device travel together with the bag (2) to be sealed and are in the form of two plates, the plate (5a) of the pressure device being heated and the plate (5b) of the cooling device having a system of cold air flow, both plates (5a, 5b) operating independently from each other.

2. Device according to claim 1, wherein both plates (5a, 5b) are mounted on a slide (4) moving together with the conveyor (1) at one side of the same and following the bag (2) to be saled.

3. Device according to claim 2, wherein both plates (5a, 5b) are mounted on said slide (4) rotably on an axis extending lengthwise to the conveyor (1).

4. Device according to claim 2 or 3, wherein at both sides of the conveyor (1) a guide (3) is provided, each of which carrying a slide (4).

## Patentansprüche

1. Vorrichtung zum automatischen Versiegeln von Säcken (2), die auf einem Förderer (1) transportiert werden und eine Füllöffnung (V) haben, auf deren Innenfläche (I) Klebstoff (C) aufgebracht ist, der bei Raumtemperatur fest ist und durch Erhitzen flüssig wird, wobei die Vorrichtung eine erhitzte Druckeinrichtung aufweist, die nach dem Füllvorgang gegen die einander gegenüberliegenden Wände der Füllöffnung (V) wirkt, dadurch gekennzeichnet, daß die erhitzte Druckeinrichtung zur Beschleunigung der Versiegelungsphase mit einer Druckkühleinrichtung kombiniert ist, welche sich gemeinsam mit dem zu verschließenden Sack (2) und mit der erhitzten Druckeinrichtung vorwärts bewegt und zusammen mit dieser aus zwei Platten besteht, von denen die Platte (5a) der Druckeinrichtung aufgeheizt ist und die Platte (5b) der Kühleinrichtung ein Kaltluftströmungssystem aufweist, wobei beide Platten (5a, 5b) unabhängig voneinander arbeiten.

2. Vorrichtung nach Anspruch 1, dadurch gekennzeichnet, daß beide Platten (5a, 5b) auf einem Schlitten (4) gelagert sind, der sich an einer Seite des Förderers (1) zusammen mit diesem vorwärts bewegt und dem zu verschließenden Sack (2) folgt.

3. Vorrichtung nach Anspruch 2, dadurch gekennzeichnet, daß beide Platten (5a, 5b) auf dem Schlitten (4) auf einer Achse schwenkbar gelagert sind, die sich in Längsrichtung des Förderers (1) erstreckt.

4. Vorrichtung nach Anspruch 2 oder 3, dadurch gekennzeichnet, daß zu beiden Seiten des Förderers (1) eine Führung (3) angebracht ist, von denen jede einen Schlitten (4) trägt.

## Revendications

1. Dispositif pour le scellement automatique de sacs (2) transportés sur un convoyeur (1) et munis d'un orifice de remplissage (V) dont les surfaces intérieures (I) sont couvertes d'une colle (C) laquelle est solide à température ambiante et devient liquide quand elle est chauffée, ledit dispositif comprenant un appareil chauffant de pression agissant contre les parois opposées dudit orifice après le remplissage, caractérisé par le fait que ledit appareil chauffant de pression est combiné, pour accélérer l'opération de scellement, avec un appareil réfrigérant de pression, l'appareil chauffant de pression et l'appareil réfrigérant se mouvant conjointement avec le sac (1) à sceller et se présentant sous la forme de plaques, la plaque (5a) de l'appareil de pression étant chauffée et la plaque (5b) de l'appareil réfrigérant étant munie d'un système de courant d'air refroidissant, les deux plaques (5a, 5b) fonctionnant indépendamment l'une de l'autre.

2. Dispositif selon la revendication 1, caractérisé par le fait que les deux plaques (5a, 5b) sont logées sur un coulisseau (4) se mouvant à un côté dudit convoyeur (1) conjointement avec lui pour suivre le sac (2) à sceller.

3. Dispositif selon la revendication 2, caractérisé par le fait que les deux plaques (5a, 5b) sont logées sur ledit coulisseau et pivotent sur un axe qui s'étend le long du convoyeur (1).

4. Dispositif selon la revendication 2 ou 3, caractérisé par le fait que sur les deux côtés du convoyeur (1) est monté un guidage (3) supportant un coulisseau (4).
